# EUROPÄISCHE PATENTSCHRIFT

(11) **EP 0 346 652 B1**
(45) Veröffentlichungstag und Bekanntmachung des Hinweises auf die Patenterteilung: **07.04.1993**
(21) Anmeldenummer: 89109205.8
(22) Anmeldetag: 22.05.1989
(51) Int. Cl.: B62D 33/027

(54) **Lastkraftwagen mit einer Ladepritsche und einem Aufbau**
Lorry with a plank bedding and a superstructure
Camion avec une plate-forme de chargement et une structure

(30) Priorität: 14.06.1988 CH 2279/88
(43) Veröffentlichungstag der Anmeldung: 20.12.1989
(73) Patentinhaber: PEKI-ANHÄNGER-u. KAROSSERIEBAU GMBH + CO. KG, 54294 Trier (DE); Peters, Günter, 33161 Hövelhof (DE)
(72) Erfinder: Peters, Günter, D-4794 Hövelhof (DE)
(74) Vertreter: Schönherr, Wolfgang

(56) Entgegenhaltungen:
- EP-A- 0 087 572
- DE-A- 3 046 178
- DE-A- 3 314 756

## Beschreibung

Die Erfindung betrifft einen Lastkraftwagen gemäß dem Oberbegriff des Patentanspruches 1.

Lastkraftwagen mit einer Ladepritsche und einem Aufbau mit je einer hohen Vorder- und Rückwand und mit je zu öffnenden und zu schließenden Seitenwänden sind besonders zum Einsatz im Frischdienst und im Getränkebetrieb geeignet. Bei geöffneter Seitenwand wird die Ladepritsche des Lastkraftwagens mit Waren, die oftmals auf Paletten gestapelt sind, be- oder entladen.

Bei bekannten Ausführungen von zu öffnenden und zu schließenden Seitenwänden an den genannten Aufbauten sind erstere meistens parallel zur Fahrzeuglängsachse in wenigstens einen unteren und einen oberen Seitenwandteil unterteilt, wobei der untere Seitenwandteil um eine mit der Ladepritsche verbundene erste Schwenkachse abklappbar und der obere Seitenwandteil mit einem daran anschließenden Dachteil zusammen um eine parallel zur Fahrzeuglängsachse angeordnete zweite Schwenkachse hochklappbar ist. Eine solche Ausführung ist in CH-A-631 123 offenbart.

Eine andere bekannte Ausführungsform nach CH-A-645 580 sieht vor, daß der untere Seitenwandteil mit einer Schwenkachse mit dem oberen Seitenwandteil verbunden ist und daß zum öffnen der Seitenwand zuerst der untere Seitenwandteil uin die genannte Schwenkachse hochschwenkbar ist, bis dieser außen am oberen Seitenwandteil anliegt, und daß die beiden Seitenwandteile mit einen daran anschließenden Dachteil zusammen um eine parallel zur Fahrzeuglängsachse angeordnete weitere Schwenkachse hoch und umklappbar sind und in der Endstellung des geöffneten Zustandes nicht vorstehend auf dem Dach des Aufbaues aufliegen.

Bei beiden bekannten Ausführungen ist jeweils der obere Seitenwandteil gelenkig mit dem beweglichen Dachteil verbunden. Weiter ist jeweils eine Hebel- und Seilzugverbindung zwischen dem beweglichen Dachteil mit dem oberen und dem unteren Seitenwandteil vorhanden und so angeordnet, daß mit einem relativ einfachen Handgriff eine vollständige öffnung der gesamten Fahrzeugseite durchführbar ist.

Ein Lastkraftwagen mit einer Ladepritsche entsprechend dem Oberbegriff des Patentanspruches 1 ist aus der deutschen Offenlegungsschrift DE-A-3 046 178 bekannt. Bei diesem bekannten Lastkraftwagen werden das obere und das untere Seitenwandteil, die gelenkig miteinander verbunden sind, beim öffnen aufeinandergeklappt, anschließend beide aufeinanderliegende Seitenwandteile nach oben geklappt und auf dem Querträger unter das Dach eingezogen.

Derartige Anordnungen zum Oeffnen und zum Schliessen von Seitenwänden haben den grossen Nachteil, dass infolge der Abklapp- oder Hochklappbewegung insbesondere des unteren Seitenwandteiles, die Seitenwand vor dem Anfahren an Rampen zu öffnen ist und erst nach dem Wegfahren von Rampen wieder geschlossen werden kann. Die Umlappbewegungen der Seitenwandteile sind relativ weit ausladend, so dass beim Oeffnen und Schliessen der Seitenwände eine Personengefährdung durch die bewegbaren Wandteile besteht.

Es ist die Aufgabe der vorliegenden Erfindung, einen Lastkraftwagen mit einer Ladepritsche und einem Aufbau zu schaffen, bei dem die Seitenwände ohne die vorgenannten Nachteile zu öffnen und zu schliessen sind.

Die Lösung dieser Aufgabe erfolgt anhand der im kennzeichnenden Teil des Patentanspruches 1 aufgeführten Merkmale.

Besonders vorteilhaft an der Erfindung erweist sich der äusserst kleine seitliche Schwenkbereich, der bei zwei Meter hohen Seitenwänden nur 525 mm beträgt und das erst in Ueberkopfhöhe. Eine Personengefährdung durch das Oeffnen und Schliessen der Seitenwände kann somit ausgeschlossen werden.

Als weiteres positives Merkmal ist die Tatsache zu werten, dass an den Seitenwänden zum Oeffnen und Schliessen derselben weder Einzelscharniere noch Scharnierbänder angeordnet sind. Diese bei bekannten Ausführungsformen durchwegs vorhandenen Bauelemente benötigten infolge nicht zu vermeidender Verschmutzung bisher immer einen gewissen Wartungsaufwand.

Dank dem besonderen Schwenkmechanismus beim Oeffnen und Schliessen der in einen unteren und einen oberen Seitenwandteil unterteilten Seitenwand ist es trotzdem möglich, die gesamte Wand in voller Höhe und Länge mit einer einstückigen Planbespannung zu versehen. Diese Möglichkeit erweist sich als besonders vorteilhaft beim Anbringen von Werbeschriftzügen an den Seitenwänden.

Die Erfindung wird nachstehend anhand eines Ausführungsbeispiels mit Bezug auf die Zeichnungen näher erläutert. In den Zeichnungen zeigen
Fig. 1 den Lastkraftwagen in perspektivischer Darstellung mit sichtbaren Ecksäulenprofilen und Seilzuganordnungen,
Fig. 2a einen Teil-Querschnitt durch den Lastkraftwagenaufbau mit den im geschlossenen Zustand und in der ersten Oeffnungsphase dargestellten Seitenwandteilen,
Fig. 2b eine Darstellung nach Fig. 2a mit den in der zweiten Oeffnungsphase und im geöffneten Zustand gezeichneten Seitenwandteilen,
Fig. 3 eine perspektivisch und teilexplosiv dargestellte Funktionszeichnung des Oeffnungs- und Schliessmechanismus,
Fig. 4 einen Längsschnitt durch ein Ecksäulenprofil mit Seilzuganordnung,
Fig. 5 einen Querschnitt durch ein Ecksäulenprofil mit Sicht auf den oberen Seitenwandteil im geschlossenen Zustand,
Fig. 6 eine Seitenansicht der Arretierungs- und Sicherheitsvorrichtung,
Fig. 7 einen Querschnitt gemäss Fig. 5 mit Sicht auf den unteren Seitenwandteil im geschlossenen Zustand,
Fig. 8 eine Ansicht einer bei langen Aufbauten zwischen der Vorder- und der Rückwand angeordneten Laufschienen und
Fig. 9 eine Seitenansicht der Laufschiene gemäss Fig. 8.

In den verschiedenen Figuren des Ausführungsbeispieles sind für gleiche Teile gleiche Bezugszeichen verwendet worden.

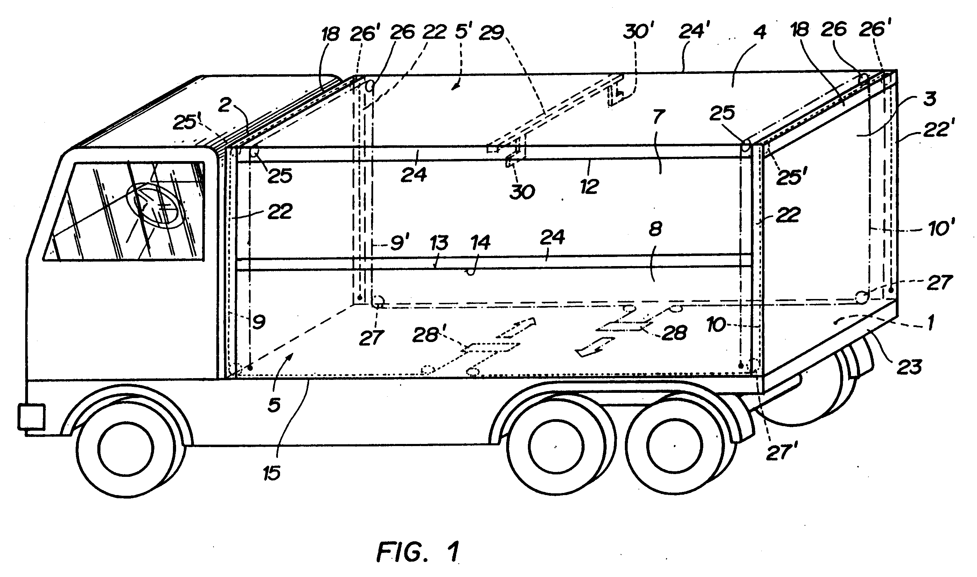

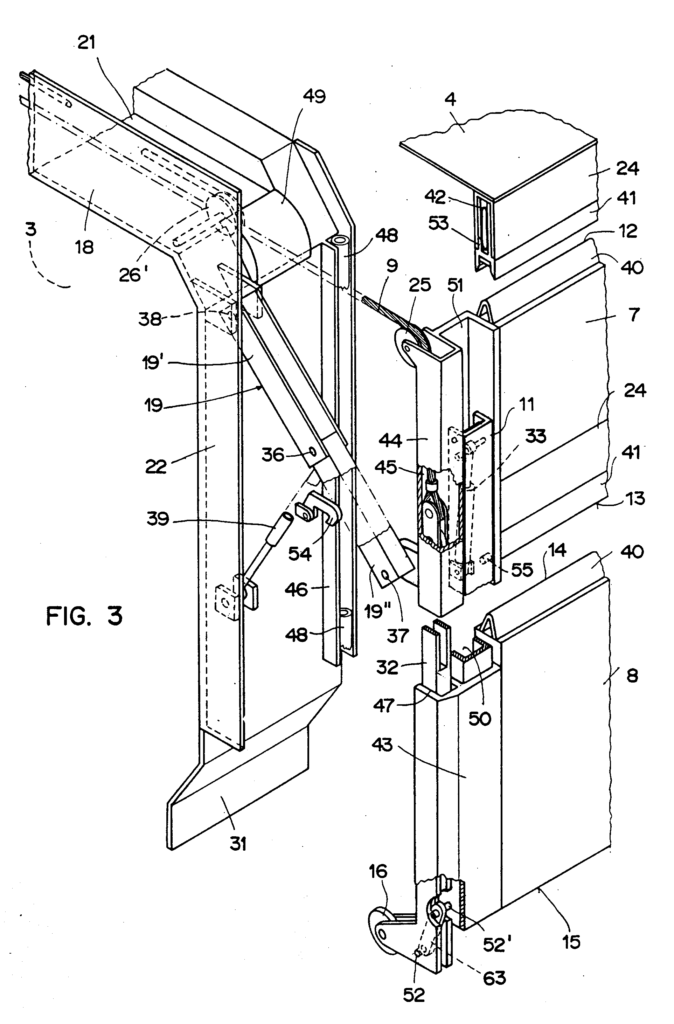

Die Fig. 1 zeigt in perspektivischer und schematischer Darstellung einen Lastkraftwagen mit einer Ladepritsche 1 und einem eine Vorderwand 2, eine Rückwand 3, ein Dach 4 und Seitenwände 5, 5′ aufweisenden Aufbau. Jede der Seitenwände 5, 5′ ist im wesentlichen mittig parallel zur Fahrzeuglängsachse in einen oberen Seitenwandteil 7 und in einen unteren Seitenwandteil 8 unterteilt. Je seitlich jeder der Seitenwände 5, 5′ sind je mit der Vorderwand 2 bzw. mit der Rückwand 3 verbundene Ecksäulenprofile 22, 22′ angeordnet, die sich über die ganze Höhe des Aufbaus erstrecken und zum Aufnehmen von Seilzügen 9, 9′ 10, 10′ sowie je eines Oeffnungs- und Schliessmechanismus, wie weiter hinten anhand der Fig. 3, 4, 5 und 6 im Detail erklärt, bestimmt sind.

Zum Oeffnen, beispielsweise der einen Seitenwand 5, sind die Seilzüge 9, 10, vorgesehen, die im wesentlichen je an einer der Aussenseiten der Unterkante 15 des unteren Seitenwandteiles 8 angreifen und über je eine, aussen im Bereich der Oberkante 12 am oberen Seitenwandteile 7 angeordnete, erste Umlenkrolle 25 in Querrichtung des Aufbaues zur gegenüberliegenden Seite des Daches 4, über je eine dort mit den entsprechenden Ecksäulenprofilen 22′ drehbar verbundene zweite Umlenkrolle 26 nach unten in einen die Ladepritsche 1 umgebenden Rahmen 23 geführt sind. In letzterem sind dritte Umlenkrollen 27 angeordnet, die je den Seilzug 9 im Bereiche der Vorderwand und den Seilzug 10 im Bereiche der Rückwand, in die Fahrzeuglängsachse umlenken und einem unterhalb der Ladepritsche 1 angeordneten Einzugsmittel 28 zuführen. Zum Oeffnen der Seitenwand 5 sind die beiden Seilzüge 9, 10 durch das Einzugsmittel 28 gemeinsam einziehbar. Das Einzugsmittel 28 kann beispielsweise aus einem Pneumatikzylinder, einem Hydraulikzylinder, einem Elektromotor oder aus einer Seilwinde bestehen.

Unterhalb des Daches 4, an dessen Aussenseiten parallel zur Fahrzeuglängsachse, sowie längs der Unterkante 13 des oberen Seitenwandteiles 7 jeder der Seitenwände 5, 5′, sind Abschlussprofile 24, 24′ angeordnet, in welchen Vorrichtungen zum Verriegeln und Abdichten der geschlossenen Seitenwand 5, 5′ vorhanden sind und deren Funktion weiter hinten erklärt ist. Je die Ecksäulenprofile 22, 22′ der Vorderwand 2 sowie der Rückwand 3 sind zum Erhöhen der Stabilität mit einem L-förmigen Querträger 18 verbunden. Die Querträger 18 sind im weiteren dazu bestimmt, wie ebenfalls weiter hinten erklärt, den beim Oeffnungsvorgang unter das Dach 4 einziehbaren Seitenwandteilen 7, 8 als Auflage und Laufschiene zu dienen.

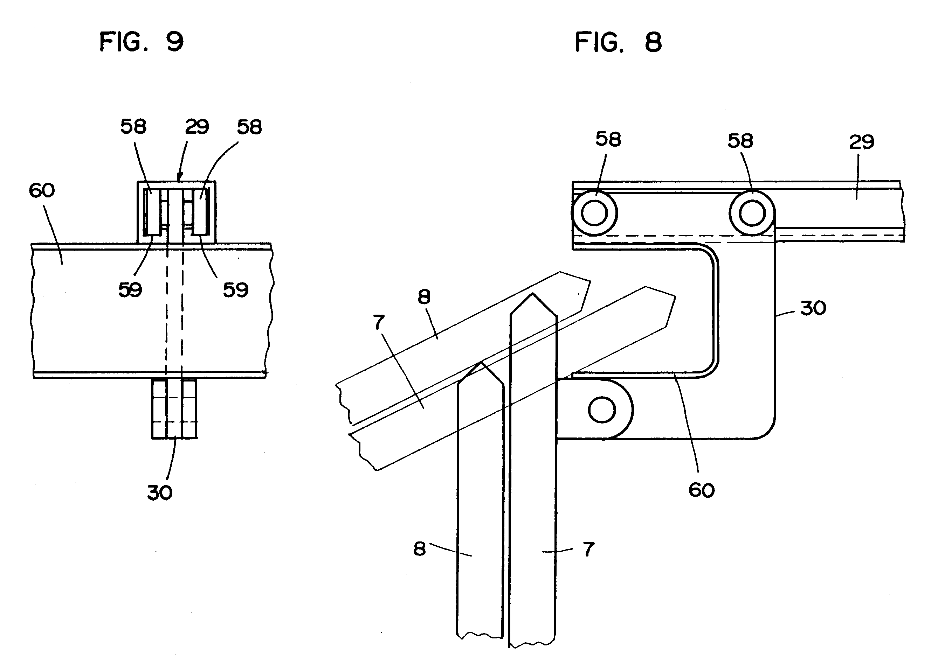

Für lange Lastwagenaufbauten, wobei unter lang eine Länge von über 5 m zu verstehen ist, ist auf der Unterseite des Daches 4 eine oder mehrere weitere Laufschienen 29 je in einem Abstand und parallel zur Vorder- bzw. Rückwand angeordnet. Die Laufschiene 29 mit den darin angeordneten Verschiebemitteln 30, 30′ dient dazu, ein Durchbiegen der Seitenwandteile 7, 8 beim Oeffnen einer der Seitenwände 5, 5′ zu verhindern. Die genaue Funktion dieser weiteren Laufschiene 29 ist weiter hinten anhand der Fig. 7 erklärt.

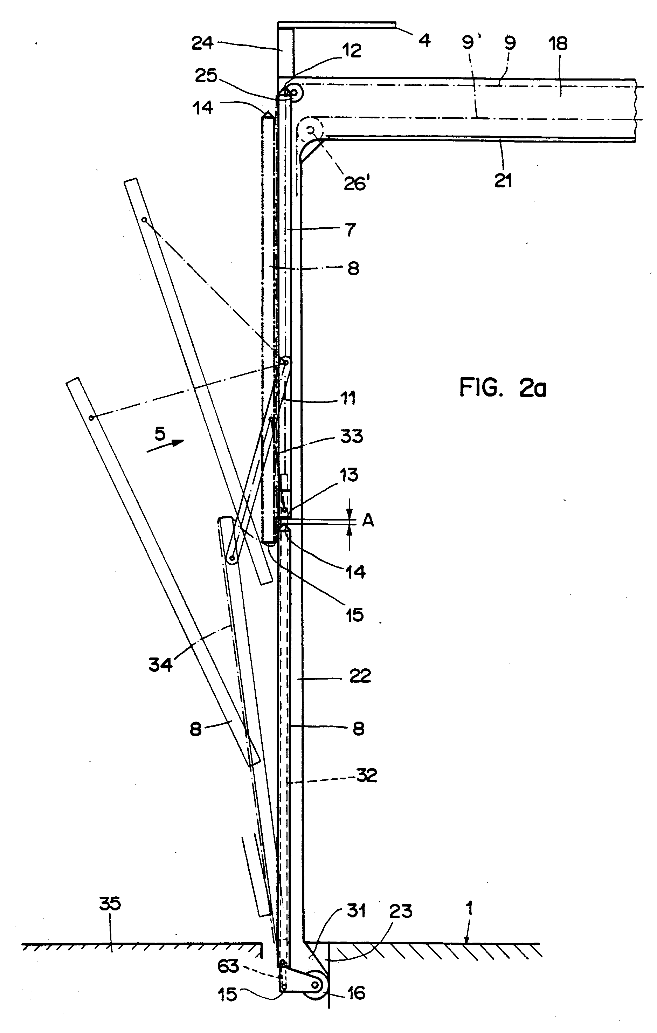

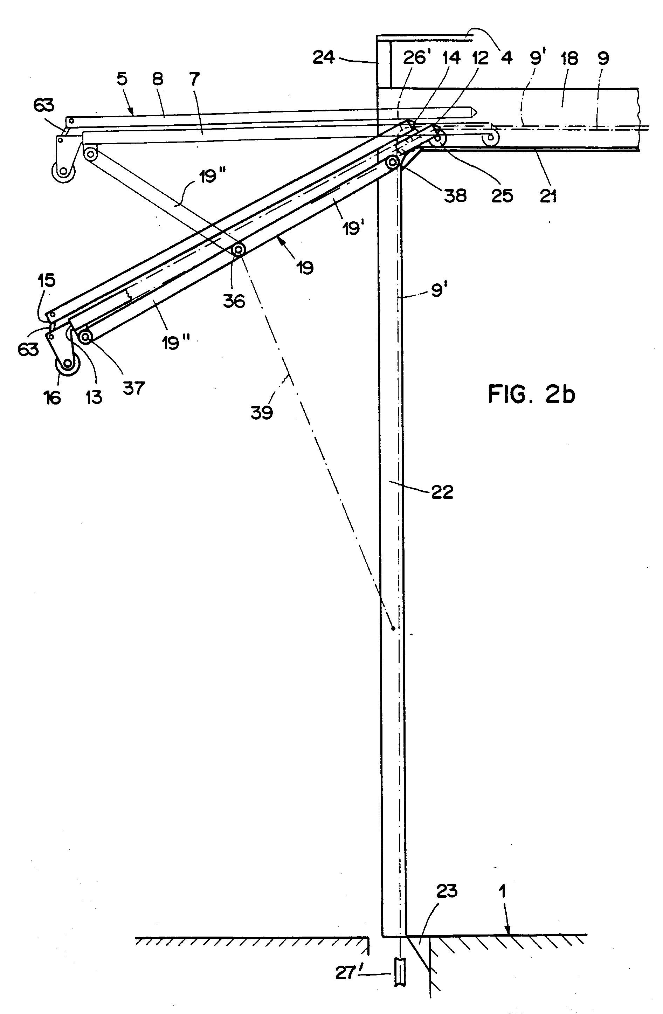

Mit Bezugnahme auf die Fig. 2a, 2b ist im folgenden der erfindungsgemässe Oeffnungsvorgang der Seitenwand 5 beschrieben.

Die Fig. 2a zeigt einen Teilquerschnitt durch den Lastkraftwagenaufbau mit den im geschlossenen Zustand und in der ersten Oeffnungsphase dargestellten Seitenwandteilen 7, 8. Die Figur zeigt eines der Ecksäulenprofile 22, das sich über die ganze Höhe des Lastkraftwagenaufbaus erstreckt und oben mit einem parallel zum Dach 4 verlaufenden Querträger 18 verbunden ist. An seinem unteren Ende ist das Ecksäulenprofil 22 mit dem die Ladepritsche 1 umfassenden Rahmen 23 verbunden und weist einen schräg nach unten und gegen die Ladepritsche 1 gerichteten verbreiterten Bereich 31 auf. Sowohl der obere Seitenwandteil 7 als auch der untere Seitenwandteil 8 liegen im geschlossenen Zustand am Ecksäulenprofil 22 an. Der untere Seitenwandteil 8 weist je aussen, im Bereich seiner Unterkante 15, eine mit letzterer über einen Hebel 63 verbundene Rolle 16 auf, welche dazu bestimmt ist, das untere Ende des unteren Seitenwandteiles 8 beim Oeffnungsvorgang längs dem Ecksäulenprofil 22 zu führen. Im weiteren greift an der Rolle 16 ein Seilzug 9 an, der über die ganze Höhe des unteren Seitenwandteiles 8 als Führungsstab 32 ausgebildet ist. Der untere Seitenwandteil 8 ist im Bereiche seiner Oberkante 14 je aussen gelenkig mit dem einen Ende eines ersten Schwenkstabes 11 verbunden, dessen anderes Ende ungefähr mittig zwischen Oberkante 12 und Unterkante 13 des oberen Seitenwandteiles 7 angelenkt ist. Ein erstes Federmittel 33, das vorzugsweise eine Gasdruckfeder umfasst, ist mit seinen Enden je mit dem ersten Schwenkstab 11 und der Unterkante 13 des oberen Seitenwandteiles 7 schwenkbar verbunden, wobei die Verbindung mit dem ersten Schwenkstab 11 ungefähr in dessen oberstem Viertel seiner Länge liegt. Zwischen der Oberkante 14 des unteren Seitenwandteiles 8 und der Unterkante 13 des oberen Seitenwandteiles 7 befindet sich im geschlossenen Zustand der Seitenwand 5 ein Abstand A von vorzugsweise 10 bis 20 mm. Die erste Umlenkrolle 25 ist im Bereiche der Oberkante 12 mit dem oberen Seitenwandteile 7 verbunden. Durch die Wirkung der ersten Gasdruckfeder 33, durch den Einfluss der Schwerkraft und durch das Ziehen am Seilzug 9 wird erreicht, dass sich der untere Seitenwandteil 8 beim Beginn des Oeffnungsvorganges leicht nach aussen neigt und der Hebel 63 nach aussen schwenkt. Geführt durch den in den Fig. 2a, 2b nicht sichtbaren Führungsstab 32, die Rolle 16 und den ersten Schwenkstab 11 vollzieht der untere Seitenwandteil 8 beim weiteren Ziehen am Seilzug 9 eine im wesentlichen zum oberen Seitenwandteil 7 parallel verlaufende, nach aufwärts gerichtete Schwenkbewegung, soweit, bis der untere Seitenwandteil 8 aussen am oberen Seitenwandteil 7 anliegt. Diese Schwenkbewegung kann auch ausgeführt werden, wenn die beiden Seitenwandteile 7,8 mit einer aus einem einzigen Stück bestehenden Plane 34 bespannt sind.

Das Bezugszeichen 35 deutet eine Rampe an. Aus der Fig. 2a ist sichtbar, dass der Oeffnungsvorgang oder der Schliessvorgang der Seitenwand 5, welcher letztere durch das Gewicht des unteren Seitenwandteiles 8 beim Nachgeben des Seilzuges 9 in umgekehrter Reihenfolge wie beschrieben erfolgt, nach dem Anfahren an die Rampe ausführbar ist.

Die Fig. 2b zeigt die zweite Oeffnungsphase und den geöffneten Zustand der Seitenwand 5 mit den beiden Seitenwandteilen 7, 8. Nach Beendigung der ersten Oeffnungsphase, dann, wenn der untere Seitenwandteil 8 aussen am oberen Seitenwandteil 7 anliegt, wird eine in dieser Figur nicht dargestellte, im Bereich der Unterkante 13 am Ecksäulenprofil 22 angebrachte Arretier- und Sicherheitsvorrichtung zum Entriegeln der Unterkante 13 des oberen Seitenwandteiles 7 betätigt. Dieser ist je aussen im Bereich seiner Unterkante 13 mit je einem zweiten, mittig ein Gelenk 36 aufweisenden Schwenkstab 19 mit einer ersten Achse 37 schwenkbar verbunden. Das andere Ende des zweiten Schwenkstabes 19 ist mit dem Ecksäulenprofil 22 im Bereiche dessen oberen Endes über eine zweite Achse 38 ebenfalls schwenkbar verbunden. Ein zweites Federmittel 39, vorzugsweise auch als Gasdruckfeder ausgeführt, ist mit seinem oberen Ende mit dem Gelenk 36 des zweiten Schwenkstabes 19 verbunden. Das untere Ende der zweiten Gasdruckfeder 39 ist an das Ecksäulenprofil 22 angelenkt und zwar etwas unterhalb der Lage der Unterkante 13 des oberen Seitenwandteiles 7 im geschlossenen Zustand. Durch die Wirkung der zweiten Gasdruckfeder 39 und durch den Zug am Seilzug 9, schwenkt die jetzt entriegelte obere Seitenwand 7 mit der auf ihr anliegenden unteren Seitenwand 8 nach aussen, bis in eine Schrägstellung von ca. 45°. Ein nicht dargestellter Anschlag verhindert das weitere Schwenken des oberen Teiles 19′ des zweiten Schwenkstabes 19. Der untere Teil 19˝ dieses Schwenkstabes schwenkt nun um das Gelenk 36 nach oben, wobei gleichzeitig die beiden Seitenwandteil 7, 8 auf der jetzt als Laufrolle dienenden und auf dem einen Schenkel 21 des Querträgers 18 rollenden ersten Umlenkrolle 25 unter das Dach 4 eingezogen werden. Der obere Teil 19′ des zweiten Schwenkstabes 19 schwenkt dabei wieder in seine vertikale Ausgangslage zurück. In der Endstellung des eingezogenen Seitenwandteiles 7, 8 liegt der untere Teil 19˝ über dem oberen Teil 19′ des zweiten Schwenkstabes 19. Die zweite Gasdruckfeder 39, die das Ausschwenken der beiden aufeinander anliegenden Seitenwandteile unterstützt hat, befindet sich jetzt wieder im gespannten Zustand, vorbereitet, um beim Nachlassen des Seilzuges die beiden unter das Dach eingezogenen Seitenwandteile 7, 8 zum Schliessen der Seitenwand 5 unter dem Dach herauszudrücken.

In der Fig. 2b ist ebenfalls der Seilzug 9′ mit jeder zweiten und der dritten Umlenkrolle 26′, 27′ dargestellt, der zum Oeffnen und Schliessen der gegenüberliegenden Seitenwand 5′ dient.

Die räumliche Anordnung und die Funktionsweise der meisten bis jetzt beschriebenen Teile am erfindungsgemässen Lastkraftwagen sind in der Fig. 3 anschaulich dargestellt. Anschlüssig an die Seitenkanten des unteren Seitenwandteiles 8 ist eine Profilschiene 43, die sich im wesentlichen über die ganze Höhe des unteren Seitenwandteiles 8 erstreckt, angeordnet. Die Profilschiene 43 weist im Querschnitt zwei in Längsachse des unteren Seitenwandteiles 8 nebeneinander angeordnete und nach innen offene U-förmige Kanäle 47, 50 auf. Je eine weitere Profilschiene 44 erstreckt sich im wesentlichen über die ganze Höhe des oberen Seitenwandteiles 7 und ist je an den Aussenkanten des letzteren befestigt. Diese Profilschiene 44 weist im Querschnitt ein nach aussen weisendes U-förmiges Profil 51 auf, mit einem daran anschliessenden, auf der dem oberen Seitenwandteil 7 abgewandten Seite angeordneten geschlossenen Führungskanal 45. Der Führungsstab 32 weist an seinem unteren Ende die Rolle 16 auf und ist über die Schwenkachse 52 schwenkbar mit dem einen Ende des Hebels 63 verbunden. Das andere Ende des Hebels 63 ist über eine weitere Schwenkachse 52′ an der Unterkante 15 des unteren Seitenwandteiles 8 angeordnet. Im geschlossenen Zustand der Seitenwand 5 liegt der Führungsstab 32 im U-förmigen Kanal 47 der unteren Profilschiene 43. Der Seilzug 9 ist über die erste Umlenkrolle 25 durch den Führungskanal 45 der oberen Profilschiene 44 geführt und am oberen Ende des Führungsstabes 32 mit letzterem verbunden. Beim Einziehen des Seilzuges 9 bewegt sich der Führungsstab 32 durch den Führungskanal 45 nach oben, wobei, wie bereits erklärt, durch Unterstützung der ersten Gasdruckfeder 33 und durch den ersten Schwenkstab 11, der untere Seitenwandteil leicht nach aussen geschwenkt und im wesentlichen in einer parallelen Bahn über den oberen Seitenwandteil gehoben wird. Der erste Schwenkstab 11 ist in seinem Querschnitt U-förmig ausgebildet und liegt im geschlossenen Zustand der Seitenwand 5 im wesentlichen im U-Profil 51 der oberen Profilschiene 44. Der Schwenkstab 11 ist an seinem unteren Ende an der Profilschiene 43 und an seinem oberen Ende ungefähr mittig mit der Profilschiene 44 je schwenkbar befestigt. Die erste Gasdruckfeder 33 ist an ihrem unteren Ende mit der Profilschiene 44 und an ihrem oberen Ende mit dem ersten Schwenkstab 11 in dessen oberstem Viertel je schwenkbar befestigt. Der zweite Schwenkstab 19 ist, wie bereits erklärt, an seinem oberen Ende mit dem Ecksäulenprofil 22 über die zweite Achse 38 und an seinem unteren Ende auf der der oberen Seitenwand 7 abgewandten Seite mit der Profilschiene 44 über die erste Achse 37 je schwenkbar befestigt. Der obere Teil 19′ und der untere Teil 19˝ des zweiten Schwenkstabes 19 sind in ihrem Querschnitt je U-profilförmig. Die beiden Teile sind mit dem Gelenk 36 schwenkbar miteinander verbunden, wobei im eingeschwenkten Zustand das U-Profil des unteren Teiles 19˝ im U-Profil des oberen Teiles 19′ liegt. Die Schenkel der beiden genannten U-Profile weisen im nicht eingeschwenkten Zustand des zweiten Schwenkstabes 19 gegeneinander. Die zweite Gasdruckfeder 39 ist an ihrem oberen Ende mit dem Gelenk 36 und an ihrem unteren Ende mit dem Ecksäulenprofil 22 je schwenkbar verbunden. Das Ecksäulenprofil 22 ist in seinem Querschnitt im wesentlichen als U-Profil ausgebildet und weist zu dem der Rückwand 3 bzw. der Vorderwand 2 abgewandten Schenkel je einen parallel zum genannten Schenkel verlaufenden Steg 46 auf, der sich über die ganze Länge des Ecksäulenprofils erstreckt und mit dem genannten Schenkel einen weiteren U-förmigen Kanal bildet, der zum Aufnehmen eines Gummischlauches 48 zum Abdichten der geschlossenen Seitenwand bestimmt ist. Sowohl der obere Seitenwandteil 7 als auch der untere Seitenwandteil 8 weisen je auf ihrer Oberkante 12, 14 eine sich über die ganze Länge jedes der Seitenwandteile erstreckende Wulst 40 auf. In jedem der Abschlussprofile 24, auf der Unterseite des Daches 4 und längs der Unterkante 13 des oberen Seitenwandteiles 7, ist je eine mit einer der genannten Wülste 40 zusammenarbeitende Verschluss- und Abdichtvorrichtung 41, 42 vorhanden. Ein Dehnelement 42, vorzugsweise ein Gummischlauch, erstreckt sich über die ganze Länge eines durch das Betätigungsmittel 41 und durch das Abschlussprofil 24 gebildeten Hohlraumes 53. Zum Verriegeln und Abdichten der geschlossenen Seitenwand 5 mit den je am Ecksäulenprofil 22 anliegenden Seitenwandteilen 7, 8 werden die genannten Gummischläuche 42 und 48 über ein nicht dargestelltes steuerbares Ventil beispielsweise mit dem Luftdruckreservoir des Lastkraftwagens verbunden. Durch das Ausdehnen des Gummischlauches 42, je in Richtung der genannten Wülste 40, bewegen sich die Betätigungselemente 41 nach unten und gelangen mit den Wülsten 40 in Eingriff. Der Gummischlauch 48 dehnt sich ebenfalls aus und drückt gegen die Innenseite der beiden Seitenwandteile 7 und 8. Zum Unterstützen der Umlenkung, die im Anschluss an die erste Oeffnungsphase beim Einziehen der beiden aufeinander anliegenden Seitenwandteile 7, 8 unter das Dach 4 beginnt, ist ein vorzugsweise aus einem Kunststoff bestehender, zylindersegmentförmiger Gleitbock 49 im Verbindungsbereich des Querträgers 18 mit dem Ecksäulenprofil 22 angeordnet.

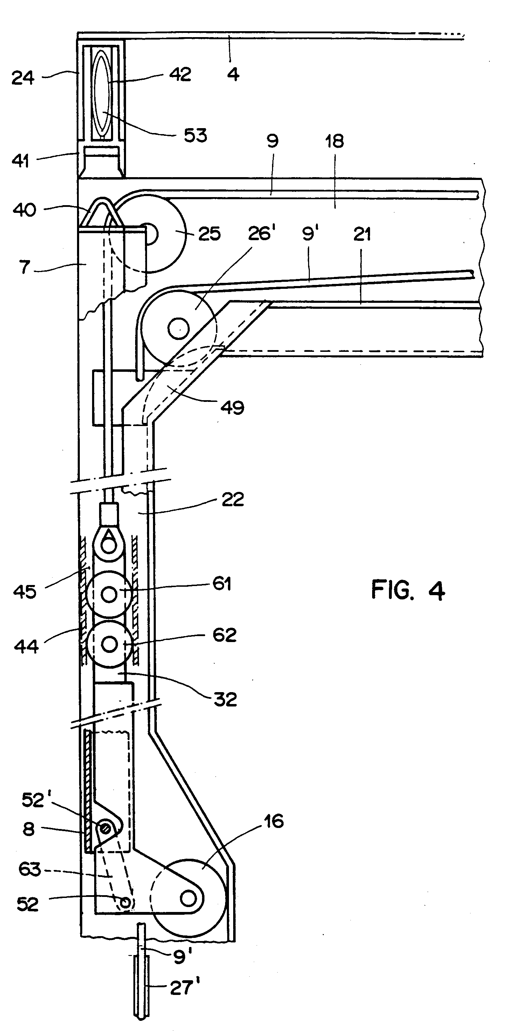

Die Fig. 4 zeigt im wesentlichen die in jedem der Ecksäulenprofile 22, 22′ vorhandene Anordnung des Seilzuges. Zum Führen des Führungsstabes 32, an dessen oberen Ende der Seilzug 9 angreift, im genannten Führungskanal 45 der oberen Profilschiene 44, weist dieser zwei Rollenkörper 61, 62 auf. Der Vorteil dieser ganzen Seilzuganordnung liegt darin, dass im geschlossenen Zustand der Seitenwand 5 sämtliche Seile verdeckt und nicht der Verschmutzung ausgesetzt sind, insbesondere aber auch darin, dass der obere Seitenwandteil 7, durch den Führungsstab 32 eine starre Verbindung zum Bodenrahmen 23 aufweist.

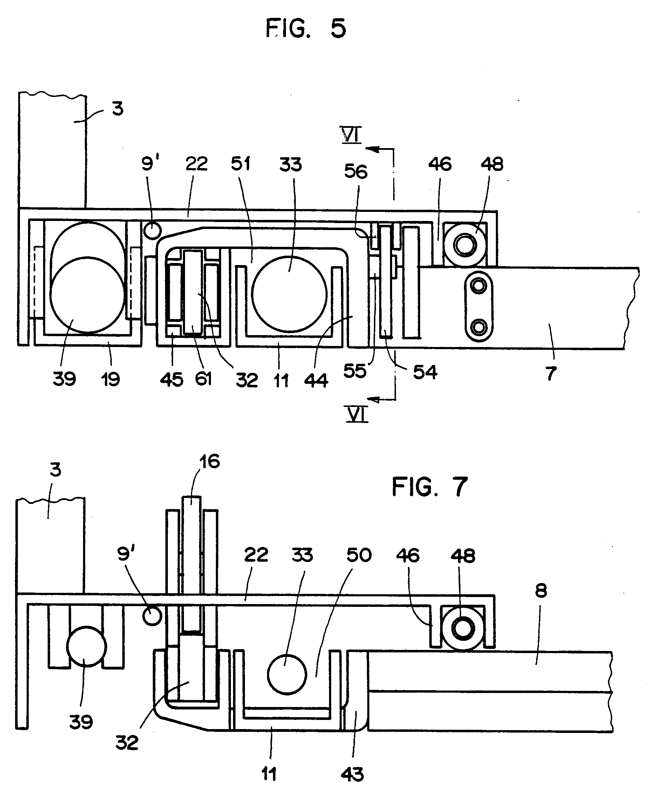

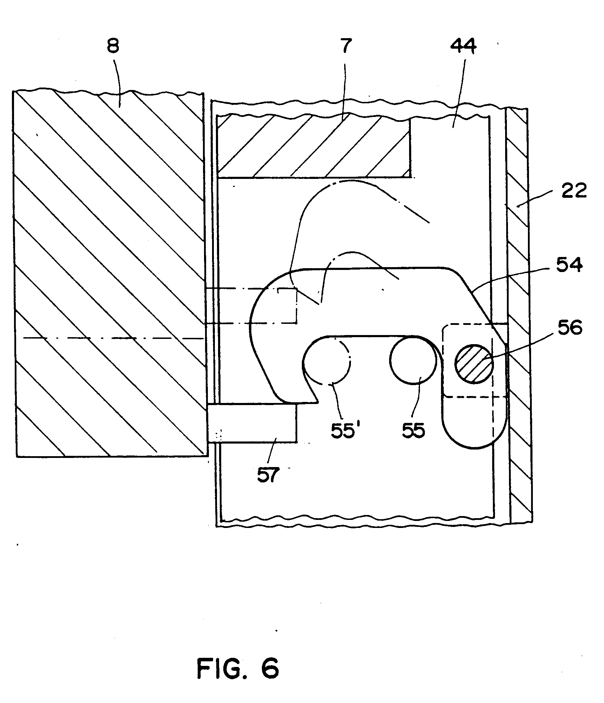

Die Fig. 5, 6 und 7 zeigen verschiedene Schnitte und Ansichten der in jedem der Ecksäulenprofile 22, 22′ angeordneten Oeffnungs- und Schliessmechanismen. Besonders erwähnenswert ist hier die Arretierungs- und Sicherheitsvorrichtung 54, 55, 56, 57, die in den Fig. 5 und 6 dargestellt ist. Ein über eine Schwenkachse 56 mit dem Ecksäulenprofil 22 schwenkbar verbundener Bügel 54 umschliesst im geschlossenen Zustand einen mit der oberen Profilschiene 44 verbundenen Zapfen 55. Der Bügel 54, mit dem arretiert bzw. gesichert wird, dient dazu, den oberen Seitenwandteil 7, währenddem der Führungsstab 32 mit dem an seinem unteren Ende angelenkten unteren Seitenwandteil 8 nach oben gezogen wird, um ca. 20 mm von der Ecksäule 22 abzuheben. Der obere Seitenwandteil 7 verschiebt sich dabei mit dem Zapfen 55 in die gestrichelt angedeutete Position 55′. Bei fast vollständig hochgezogenem unterem Seitenwandteil 8 hebt ein an der Profilschiene 43 im Bereiche der Unterkante 15 des unteren Seitenwandteiles 8 befestigter Mitnehmer 57 den Bügel 54 so weit an (in der Fig. 6 gestrichelt gezeichnet), dass der obere Seitenwandteil 7 mit dem davor anliegenden unteren Seitenwandteil 8 herausschwenkbar und zum Ausführen der zweiten Oeffnungsphase freigegeben ist.

Darüberhinaus hat der Bügel 54 eine Sicherungsaufgabe. Wenn die pneumatische Verschlussvorrichtung, infolge Druckabfalles, in den Gummischläuchen 48 und 42 unbeabsichtigt entriegelt, kann der obere Seitenwandteil 7 nur ca. 20 mm nach aussen gedrückt werden. Beim unteren Seitenwandteil 8 ist eine selbsttätige Oeffnung deshalb auszuschliessen, weil hierzu eine vertikale, nach oben wirkende Kraft erforderlich wäre.

Bei den im geöffneten Zustand der Seitenwand 5 unter das Dach eingezogenen, aufeinanderliegenden Seitenwandteilen 7, 8, die nur je im Bereiche der Vorderwand 2 und der Rückwand 3 auf je einem Schenkel 21 der Querträger 18 aufliegen, besteht die Gefahr, dass sich bei langen Lastkraftwagenaufbauten die Seitenwandteile nach unten durchbiegen. Unter langen Lastkraftwagenaufbauten werden solche verstanden, bei denen die Länge der Seitenwandteile 5 m und mehr beträgt. In den Fig. 8 und 9 ist die weitere Laufschiene 29 mit dem darin bewegbaren Verschiebemittel 30, wie bereits in der Fig. 1 angedeutet, dargestellt. Das Verschiebemittel 30 umfasst einen U-förmigen Bügel, an dessen einem Schenkel mit der Laufschiene 29 in Eingriff stehende Rollmittel 58 angeordnet sind, welche ein leichtes Verschieben des U-förmigen Bügels in der ebenfalls einen U-förmigen Querschnitt mit an den Enden nach innen abgekröpften Schenkeln 59 gestatten. Der obere Seitenwandteil 7 ist im Bereiche seiner Oberkante 12 schwenkbar an den anderen Schenkel des U-förmigen Bügels angelenkt. Der U-förmige Bügel umfasst eine eine gewisse Länge aufweisende, parallel zur Oberkante 12 des oberen Seitenwandteiles verlaufende U-förmige Schiene 60. Beim Schwenken und Einziehen der beiden Seitenwandteile 7, 8 liegt der Seitenwandteil 7 im Bereiche seiner Oberkante 12 auf dem einen Schenkel der U-Schiene 60 auf. Dadurch wird ein Durchbiegen resp. ein Durchhängen der beiden eingezogenen Seitenwandteile 7, 8 verhindert.

Eine weitere Ausführungsmöglichkeit sieht vor, mit nur einer Verschluss- und Abdichtvorrichtung 41, 42 die gesamte Seitenwand zu verriegeln und abzudichten. Das Betätigungselement 41 mit dem Federelement 42 ist in diesem Fall am Rahmen 23 der Ladepritsche 1 befestigt und dazu bestimmt, während dem Verschlussvorgang zunächst den unteren Seitenwandteil 8 anzuheben und in den oberen Seitenwandteil 7 hineinzuschieben, um dann die gesamte Seitenwand 5 in einen Dachrahmen zu heben. Mit dieser Ausführungsform wird erreicht, dass die komplette Seitenwand 5 vom Dach 4 bis zum Bodenrahmen 23 eine glatte Einheit bildet. Dies ist ein grosser Vorteil beim Anbringen von Werbeaufschriften, wenn die Seitenwandteile 7, 8 mit einer starren Aussenhaut, beispielsweise Aluminium, versehen sind.

## Patentansprüche

1. Lastkraftwagen mit einer Ladepritsche (1) und einem eine Vorderwand (2), eine Rückwand (3), ein Dach (4) und Seitenwände (5, 5') aufweisenden Aufbau, wobei wenigstens eine der Seitenwände (5) in mindestens zwei parallel zur Fahrzeugachse verlaufende Seitenwandtelle (7, 8) unterteilt ist, je einem, außen an der Unterkante (15) des unteren Seltenwandteiles (8) angreifenden Seilzug (9, 10) zum öffnen und/oder Schließen der Seitenwand (5), wobei auf der Unterseite des Daches (4) im Bereich der Vorder- und der Rückwand (2, 3) je ein parallel zur Vorder- und Rückwand verlaufender als Auflage und Laufschiene bestimmter Querträger (18) der unter das Dach (4) einziehbaren Seitenwandteile (7, 8) vorhanden ist, der obere Seitenwandteil (7) außen im Bereich seiner Unterkante (13) mit je einem Schwenkstab (19) mit der Vorder- und Rückwand (2, 3) schwenkbar verbunden ist und wobei die parallel aneinander anliegenden unteren und oberen Seitenwandteile (7, 8) mit Hilfe des Schwenkstabes (19) und des Seilzuges (9, 10) gemeinsam nach außen schwenkbar und auf dem Querträger (18) aufliegend unter das Dach (4) einziehbar sind, dadurch gekennzeichnet, daß der untere Seitenwandteil (8) je außen im Bereich seiner Oberkante mit einem Schwenkstab (11) mit dem oberen Seitenwandteil (7) je außen ungefähr mittig zwischen Oberkante (12) und Unterkante (13) schwenkbar verbunden ist, daß der untere Seitenwandteil (8) von einer unten als Verlängerung an den oberen Seitenwandteil (7) anschließenden ersten Endlage durch den Seilzug (9, 10) in einer im wesentlichen parallel zum oberen Seitenwandteil (7) verlaufenden Bahn in eine dem oberen Seitenwandteil (7) außen anliegende zweite Endlage verschiebbar ist,
daß der auf der Unterseite des Daches (4) verlaufende Querträger (18) in wesentlichen L-förmig ausgebildet ist, daß der mittig gelenkig ausgeführte Schwenkstab (19) im wesentlichen mit dem oberen Ende je der Seitenkante der Vorder- und Rückwand (2, 3) schwenkbar verbunden ist und daß die parallel aneinander anliegenden unteren und oberen Seitenwandteile (7, 8) je auf dem einen, parallel zur Dachfläche verlaufenden Schenkel (21) der genannten Querträger (18) aufliegend unter das Dach (4) einziehbar sind.

2. Lastkraftwagen nach Anspruch 1, dadurch gekennzeichnet, dass ein erstes Federmittel (33) an seinem unteren Ende im wesentlichen mit der Unterkante des (13) oberen Seitenwandteiles (7) und an seinem oberen Ende mit dem ersten Schwenkstab (11), im Bereich dessen oberen Hälfte, zum Unterstützen der im wesentlichen parallelen Verschiebbarkeit des unteren Seitenwandteiles (8) zum oberen Seitenwandteil (7) schwenkbar verbunden ist.

3. Lastkraftwagen nach Anspruch 1 oder 2, dadurch gekennzeichnet, dass ein zweites Federmittel (39) an seinem oberen Ende im mittig angeordneten Gelenk (36) des zweiten Schwenkstabes (19) und an seinem unteren Ende unterhalb der Unterkante (13) des oberen Seitenwandteiles (7) mit der Seitenkante der Vorder- bzw. der Rückwand zum Unterstützen der Schwenkbewegung der beiden aneinander anliegenden Seitenwandteile (7, 8) beim Oeffnen, und zum Herausdrücken der beiden unter das Dach (4) eingezogenen Seitenwandteile (7, 8) beim Schliessen der Seitenwand (5) schwenkbar verbunden ist.

4. Lastkraftwagen nach Anspruch 2 oder 3, dadurch gekennzeichnet, dass das erste und das zweite Federmittel (33, 39) je eine Gasdruckfeder ist.

5. Lastkraftwagen nach einem der Ansprüche 1 bis 4, dadurch gekennzeichnet, dass wenigstens je auf einer sich entsprechenden Aussenseite der Vorder- und der Rückwand je ein parallel zu der Seitenkante und sich im wesentlichen über die Höhe der genannten Wände erstreckendes Ecksäulenprofil zum Aufnehmen der Schwenkstäbe, der Gasdruckfedern und des Seilzuges vorhanden ist.

6. Lastkraftwagen nach einem der Ansprüche 1 bis 5, dadurch gekennzeichnet, dass beidseitig an die Seitenkanten je des oberen und des unteren Seitenwandteiles (7, 8) sich im wesentlichen über die ganze Länge jedes der Seitenwandteile (7, 8) erstreckende Profilschienen (43, 44) anschlüssig angeordnet sind, dass je ein Führungsstab (32) durch einen in jeder der mit dem oberen Seitenwandteil (7) verbundenen Profilschienen (44) vorhandenen, im Querschnitt geschlossenen Führungskanal (45) geführt ist, dass der Seilzug (9, 10) am oberen Ende des Führungsstabes angreift, dass der Führungsstab (32) im geschlossenen Zustand der Seitenwand (5) sich durch einen U-förmigen Kanal (47), der mit dem unteren Seitenwandteil (8) verbundenen Profilschiene (43) erstreckt und mit der Unterkante (15) des unteren Seitenwandteiles (7) zum Führen des letzteren beim Oeffnen und Schliessen der Seitenwand (5) schwenkbar verbunden ist.

7. Lastkraftwagen nach Anspruch 6, dadurch gekennzeichnet, dass die am oberen Ende jedes der Führungsstäbe (32) befestigten Seilzüge (9, 10) über je eine aussen im Bereich der Oberkante (12) des oberen Seitenwandteiles (7) angeordnete erste Umlenkrolle (25) parallel zum Querträger (18) zur gegenüberliegenden Dachseite über je eine dort mit den Ecksäulenprofilen (22′) drehbar verbundene zweite Umlenkrolle (26) in einen die Ladepritsche (1) umgebenden Rahmen (23) geführt sind, und dass je eine im Bereiche der Vorder- (2) und der Rückwand (3) im Rahmen (23) angeordnete dritte Umlenkrolle (27) dazu bestimmt ist, die Seilzüge (9, 10) in die Längsrichtung des Rahmens (23) umzulenken und einem unterhalb der Ladepritsche (1) vorhandenen Einzugsmittel (28) zum gemeinsamen Einziehen beim Oeffnen der Seitenwand (5), zuzuführen.

8. Lastkraftwagen nach einem der Ansprüche 1 bis 7, dadurch gekennzeichnet, dass bei langen Aufbauten auf der Dachunterseite wenigstens eine in einem Abstand parallel zur Rückwand verlaufende weitere Laufschiene (29) mit darin bewegbaren Verschiebemitteln (30, 30′) anordbar ist, dass die Verschiebemittel (30, 30′) einen U-förmigen Bügel umfassen, an dessen einem Schenkel mit der Laufschiene in Eingriff stehende Gleit- oder Rollmittel (58) angeordnet sind und dessen anderer Schenkel mit der Oberkante des oberen Seitenwandteiles (7) gelenkig verbunden ist und als Auflage der Seitenwandteile (7, 8) zum Verhindern des Durchbiegens beim Einziehen der letzteren unter das Dach (4) dient.

9. Lastkraftwagen nach einem der Ansprüche 1 bis 8, dadurch gekennzeichnet, dass die zum Oeffnen und Schliessen bestimmten Seitenwandteile (7, 8) im geschlossenen Zustand mit einer pneumatisch wirkenden Verschluss- und Abdichtvorrichtung (41, 42) verriegelbar und abdichtbar sind.

10. Lastkraftwagen nach Anspruch 9, dadurch gekennzeichnet, dass eine Arretierungs- und Sicherungsvorrichtung (54, 55, 56, 57) zum Verhindern einer selbsttätigen Oeffnung der Seitenwand (5) bei einem plötzlichen Druckabfall in der Verschluss- und Abdichtvorrichtung (40, 41, 42), vorhanden ist.

## Claims

1. Lorry having a loading platform (1) and a structure comprising a front wall (2), a rear wall (3), a roof (4) and side walls (5, 5'), whereby at least one of the side walls (5) is divided into at least two side-wall sections (7, 8) which extend parallel with the vehicle axis, one each rope pulley (9, 10) which engages externally at the bottom edge (15) of the lower side-wall section (8) for opening and/or closing the side wall (5), with one each transverse support (18) at the bottom side of the roof (4) in the area of the front and the rear wall (2, 3) extending parallel with the front and rear wall (2, 3) as a support and running rail for side-wall sections (7, 8) which are retractable under the roof (4), and with the upper side-wall section (7) externally pivotably connected in the area of its bottom edge (13) to one each pivot boom (19) to the front and rear wall (2, 3), and with the lower and upper side-wall sections (7, 8), which are disposed adjacent and in parallel to each other, being jointly pivoted to the outside and retracted under the roof (4) whilst being supported on the transverse support (18) by means of the pivot boom (19) and the rope pulley (9, 10), **characterised in that** the bottom side-wall section (8) is, in the area of its top edge, externally connected by way of a pivot boom (11) to the top side-wall section (7) so as to be externally and approximately centrally pivotable between top edge (12) and bottom edge (13), that the bottom side-wall section (8) is displaceable by means of the rope pulley (9, 10) from an initial end position, which connects at the bottom as an extension to the upper side-wall section (7), in a path which is substantially parallel with the top side-wall section (7), into aZsecond end position which is externally adjacent the top side-wall section (7), that the transverse support (18) which extends along the bottom side of the roof (4) is substantially L-shaped, that the centrally hinged pivot boom (19) is substantially pivotably connected to the top end of a respective side edge of the front and rear wall (2, 3), and that the bottom and top side-wall sections (7, 8) which are in parallel adjacent to each other are each retractable under the roof (4) on the one shank (21), which extends parallel with the roof surface, of the said transverse supports (18).

2. Lorry according to claim 1, **characterised in that** a first spring element (33) is pivotably connected at its bottom end substantially to the bottom edge of (13) the upper side-wall section (7) and at its top end to the first pivot boom (11), in the region of its top half, in order to aid a substantially parallel displaceability of the bottom side-wall section (8) towards the top side-wall section (7).

3. Lorry according to claim 1 or 2, **characterised in that** a second spring means (39) is pivotably connected at its top end in the centrally arranged hinge (36) of the second pivot boom (19) and at its bottom end below the bottom edge (13) of the upper side-wall section (7) to the side edge of the front or rear wall in order to aid the pivot movement of the two adjacent side-wall sections (7, 8) during opening, and to push out the two side-wall sections (7, 8) which are retracted under the roof (4) when closing the side wall (5).

4. Lorry according to claim 2 or 3, **characterised in that** the first and the second spring means (33, 39) are respective gas-pressure springs.

5. Lorry according to one of claims 1 to 4, **characterised in that** at least on each respective outside of the front and rear wall is arranged a respective corner-column profile which extends substantially over the height of said walls for accommodating the pivot boom, the gas-pressure springs and the rope pulley.

6. Lorry according to one of claims 1 to 5, **characterised in that** profile rails (43, 44), which extend substantially over the entire length of each side-wall section (7, 8), are connected on both sides to the side edge of a respective top and bottom side-wall section (7, 8), that a respective guide bar (32) is ducted through a cross-sectionally sealed guide channel (45), which is provided in each of the profile rails (44) which are connected to the top side-wall section (7), that the rope pulley (9, 10) engages at the top end of the guide bar, that the guide bar (32), in the closed state of the lateral wall (5), extends through a U-shaped channel (47) of the profile rail (43), which is connected to the lower side-wall section (8), and is pivotably connected to the bottom edge (15) of the bottom side-wall section (7) for guiding the latter when opening and closing the side wall (5).

7. Lorry according to claim 6, **characterised in that** the rope pulleys (9, 10), which are attached to the top end of each guide bar (32), are guided via a respective first diverting roller (25), which is disposed externally in the area of the top edge (12) of the top side-wall section (7), parallel to the transverse support (18) to the opposite side of the roof via a second diverting roller (26), which is rotatably connected thereat to the corner-column profiles (22'), into a frame (23) which encloses the loading platform (1), and that a respective third diverting roller (27), which is disposed in the area of the front (2) and the rear wall (3) in the frame (23), serves to redirect the rope pulleys (9, 10) in the longitudinal direction of the frame (23) and to feed them to a pulling-in device (28), which is positioned below the loading platform (1), for mutual pulling in when opening the side wall (5).

8. Lorry according to one of claims 1 to 7, **characterised in that,** in the case of long structures, at least one further guide rail (29) with therein displaceable displacement means (30, 30') is arranged at the bottom side of the roof to extend at a distance to, and in parallel with the rear wall, that the displacement means (30, 30') include a U-shaped yoke, the one shank of which comprises sliding or roller means (58) which engage the guide rail, and the other shank of which is hinged to the top edge of the upper side-wall section (7) and serves as a support of the side-wall sections (7, 8) to prevent bending when pulling the latter under the roof (4).

9. Lorry according to one of claims 1 to 8, **characterised in that** the side-wall sections (7, 8) intended for opening and closing are, in their closed state, locked and sealed by a pneumatically operating closing and sealing device (41, 42).

10. Lorry according to claim 9, **characterised in that** an arresting and securing device (54, 55, 56, 57) is provided to prevent automatic opening of the side wall (5) in the event of a sudden pressure drop in the locking and sealing device (40, 41, 42).

## Revendications

1. Camion comportant une plate-forme de chargement (1) et une structure présentant une paroi avant (2), une paroi arrière (3), un toit (4) et des parois latérales (5, 5'), au moins l'une des parois latérales (5) étant divisée en au moins deux éléments de paroi (7, 8) s'étendant parallèlement à l'axe du véhicule, respectivement une commande à câble (9, 10) agissant à t'extérieur sur l'arête inférieure (15) de l'élément (8) pour l'ouverture et/ou ta fermeture de la paroi latérale (5) tandis que sur la face inférieure du toit (4), au voisinage des parois avant et arrière (2, 3) se trouve une traverse (18) s'étendant parallèlement auxdites parois avant et arrière et servant d'appui et de rail de coulissement pour les éléments (7, 8) des parois latérales pouvant se rétracter sous te toit (4), l'élément supérieur (7) de la paroi latérale étant relié de manière oscillante au voisinage de son arête inférieure (13) à respectivement une barre oscillante (19) aux parois avant et arrière (2, 3), les éléments (7, 8) des parois latérales inférieure et supérieure parallèlement adjacents pouvant être rétractés sous le toit (4) à l'aidé de la barre oscillante (19) et de la commande à câble (9, 10) en pivotant ensemble vers l'extérieur et en venant s'appliquer sur la traverse (18), caractérisé par te fait que l'élément inférieur (8) de la paroi latérale est relié de manière oscillante respectivement à l'extérieur au voisinage de son arête supérieure, à l'élément supérieur (7) dé paroi latérale au moyen d'une barre oscillante (11), cette liaison se trouvant approximativement au centre entre l'arête supérieure (12) et l'arête inférieure (13), par le fait que l'élément inférieur (8) de paroi latérale est mobile vers une deuxième position finale s'appliquant à l'extérieur sur l'élément supérieur (7) de paroi latérale en partant d'une première position d'extrémité faisant suite, en le prolongeant, à l'élément supérieur (7), ce déplacement étant effectué par la commande à câble (9, 10) selon un trajet s'étendant sensiblement parallèlement audit élément supérieur (7), par le fait que la traverse (18) s'étendant sur la face inférieure du toit (4) est réalisée sensiblement en forme de L, par le fait que la barre oscillante (19) réalisée de manière articulée au centre est reliée de façon oscillante à sensiblement l'extrémité supérieure de chaque arête latérale des parois avant et arrière (2, 3) et par le fait que les éléments inférieur et supérieur (7, 8) des parois latérales adjacentes et parallèles peuvent être rétractés sous ledit toit (4), chacun d'eux venant s'appliquer sur un bras 21 desdites traverses (18), ce bras s'étendant parallèlement à la surface du toit.

2. Camion selon la revendication 1, caractérisé par le fait qu'un premier moyen élastique (33) est relié de manière oscillante par son extrémité inférieure, sensiblement à l'arête inférieure de l'élément supérieur (7) de la paroi latérale et par son extrémité supérieure au premier bras oscillant (11) au voisinage de la moitié supérieure de celui-ci, afin de contribuer à la mobilité sensiblement parallèle de l'élément inférieur (8) par rapport à l'élément supérieur (7) de la paroi latérale.

3. Camion selon la revendication 1 ou 2, caractérisé par le fait qu'un deuxième moyen élastique (39) est relié de manière oscillante par son extrémité supérieure à l'articulation (36) disposée au centre de la deuxième barre oscillante (19), et par son extrémité inférieure sous l'arête inférieure (13) de l'élément supérieur (7) à l'arête latérale des parois avant et arrière, afin de contribuer au mouvement oscillant des deux éléments (7, 8) mutuellement adjacents lors de l'ouverture, et afin de faire sortir ensemble lesdits deux éléments (7, 8) rétractés sous le toit (4) lors de la fermeture de la paroi latérale (5).

4. Camion selon la revendication 2 ou 3, caractérisé par le fait qué le premier et le deuxième moyens élastiques (33, 39) sont chacun un ressort à gaz.

5. Camion selon l'une des revendications 1 à 4, caractérisé par le fait qu'au moins sur chacune des faces extérieures des parois avant et arrière se trouve respectivement un profité s'étendant parallèlement à l'arête latérale et sensiblement sur la hauteur des parois mentionnées, ce profilé étant destiné à recevoir les barres oscillantes, les ressorts à gaz et la commande à câble.

6. Camion selon l'une des revendications 1 à 5, caractérisé par la présence de rails profilés (43, 44), sur les deux côtés, s'appliquant sur les arêtes latérales de chacun des éléments supérieur et inférieur (7, 8), sensiblement sur toute la longueur desdits éléments (7, 8), par le fait que respectivement une barre de guidage (32) est guidée dans un canal de guidage (45) à section transversale fermée et se trouvant dans chacun des rails (44) de l'élément supérieur (7), par le fait que la commande à câble (9, 10) agit sur l'extrémité supérieure de la barre de guidage, par le fait que la barre de guidage (32), à l'état fermé de la paroi latérale (5), s'étend dans un canal (47) en forme de U du rail (43) relié à l'élément inférieur (8), la barre de guidage étant reliée de manière oscillante à l'arête inférieure (15) de l'élément inférieur (7) afin de guider celui-ci lors de l'ouverture et de la fermeture de la paroi latérale (5).

7. Camion selon ta revendication 6, caractérisé par le fait que les commandes à câble (9, 10) fixées à l'extrémité supérieure de chacune des barres de guidage (32) passent respectivement sur une première poulie de renvoi (25) disposée à l'extérieur au voisinage de l'arête supérieure de l'élément supérieur (7), parallèlement aux traverses (18) pour parvenir au côté opposé du toit et sur respectivement une deuxième poulie de renvoi (26) reliée en direction du côté opposé du toit aux profilés (22') à l'intérieur d'un châssis (23) entourant la plate-forme de chargement (1), et qu'une troisième poulie de renvoi 27 disposée dans le châssis (23) au voisinage des parois avant (2) et arrière (3) respectivement est destinée à renvoyer les câbles (9, 10) en direction longitudinale dudit châssis (23) et à les diriger vers un moyen d'introduction (28) placé sous la plate-forme de chargement (1) en vue d'une rétraction commune lors de l'ouverture de la paroi latérale (5).

8. Camion selon l'une quelconque des revendications 1 à 7, caractérisé par le fait qu'en cas de présence de superstructure longue, sur la face inférieure du toit peut être disposé au moins un autre rail de déplacement (29) s'étendant parallèlement à une certaine distance de la paroi arrière et comportant à l'intérieur des moyens de déplacement mobiles (30, 30'), par le fait que les moyens de déplacement (30, 30') renferment un étrier en forme de U sur un bras duquel sont disposés des moyens de coulissement et de roulement (58) en prose avec le rail et dont l'autre bras est relié de manière articulée à l'arête supérieure de l'élément supérieur (7) de la paroi latérale et sert d'appui aux éléments (7, 8) de la paroi latérale afin d'empêcher toute flexion lors de la rétraction de ces derniers sous le toit (4).

9. Camion selon l'une quelconque des revendications 1 à 8, caractérisé par le fait que tes éléments (7, 8) de la paroi latérale destinés à l'ouverture et à la fermeture peuvant être verrouillés et rendus étanches, à l'état fermé, à l'aide d'un dispositif pneumatique d'obturation et d'étanchéité (41, 42).

10. Camion selon la revendication 9, caractérisé par la présence d'un dispositif de blocage et de sécurité (54, 55, 56, 57) pour empêcher toute ouverture accidentelle de la paroi latérale (5) lors d'une chute brutale de la pression à l'intérieur du dispositif d'obturation et d'étanchéité (40, 41, 42).
